# EUROPÄISCHE PATENTANMELDUNG

(11) **EP 4 386 880 A1**
(43) Veröffentlichungstag der Anmeldung: **19.06.2024**
(21) Anmeldenummer: 22213535.2
(22) Anmeldetag: 14.12.2022
(51) Int. Cl.: H01M 4/04, H01M 4/139

(54) **VERFAHREN UND VORRICHTUNG ZUR TROCKNUNG EINES ELEKTRODENMATERIALS EINER BATTERIEZELLENHERSTELLUNG**

(71) Anmelder: Siemens Aktiengesellschaft, 80333 München (DE)
(72) Erfinder: Schulte, Sascha, 91315 Höchstadt (DE); Albrecht, Andreas, 89081 Ulm (DE); Winterstein, Heiko, 91325 Adelsdorf (DE)
(74) Vertreter: Siemens Patent Attorneys

(57) **Zusammenfassung**

Es wird ein Verfahren zur Trocknung eines Elektrodenmaterials (1) einer Batteriezellenherstellung mittels einer Lasertrocknung vorgeschlagen, welches gekennzeichnet dadurch ist, dass mit einer ersten Leistung eines erstens Lasers (10) der Lasertrocknung eine Vertiefung (11) in das Elektrodenmaterial (1) durch einen Materialabtrag hergestellt wird, und anschließend mit einer gegenüber der ersten Leistung reduzierten zweiten Leistung eines zweiten Lasers (20) innerhalb der Vertiefung (11) ein materialabtragsfreier Wärmeeintrag (21) zur Trocknung erfolgt.

Weiterhin betrifft die Erfindung eine Vorrichtung zur Trocknung eines Elektrodenmaterials (1) einer Batteriezellenherstellung.

## Beschreibung

Die Erfindung betrifft ein Verfahren gemäß dem Oberbegriff des Patentanspruches 1 sowie eine Vorrichtung gemäß dem Oberbegriff des Patentanspruches 11.

Bei einer Produktion beziehungsweise Herstellung von Batteriezellen (Batteriezellenherstellung) werden die herzustellenden Elektroden zunächst auf langen Bahnen mit einem Elektrodenmaterial beschichtet. Hierbei erfolgt das Beschichten typischerweise mittels des Auftragens einer Elektrodenpaste auf einer Metallfolie (Stromsammler), die beispielsweise Grafit, Bindemittel, Lösemittel und/oder weitere Bestandteile umfasst.

Nach dem Auftragen der Elektrodenpaste auf die Metallfolie ist eine Trocknung der Elektrodenpaste erforderlich. Dies ist notwendig, damit sich eine feste sowie teilflexible Beschichtungsfläche ausbildet. Typischerweise weist die Beschichtung eine Beschichtungsdicke von 50 Mikrometern bis 250 Mikrometern auf. Die Metallfolie weist typischerweise lediglich eine Dicke von einigen 10 Mikrometern auf.

Die genannte Trocknung beziehungsweise der genannte Trocknungsschritt erfordert große Energiemengen und, besonders bei einer industriellen Fertigung, große Aufbauten. Bei industrieüblichen Produktionsanlagen werden die nassbeschichteten Folien mit bis zu 80 Meter pro Minute beschichtet. Die Trocknung mit Konvektionsöfen und/oder Heizstrahlern dauert in etwa eine Minute, sodass ein etwa 80 Meter langer Trocknungsofen erforderlich wäre.

Innerhalb der als Ofen ausgebildeten Trocknungseinheiten wird die Elektrodenpaste mittels Konvektion oder Heizstrahlern bei Temperaturen im Bereich von etwa 100 Grad Celsius bis 200 Grad Celsius getrocknet. Es ist eine bestimmte Zeit erforderlich, um die Restfeuchte, beispielsweise von Lösemitteln, aus den tieferen Ebenen der Beschichtung zur Oberfläche zu transportieren und zu verdampfen.

Weiterhin ist es bekannt, das Elektrodenmaterial mittels einer Lasertrocknung zu trocknen. Hierbei wird der zu trocknende Bereich großflächig mit einem Hochleistungslaser bestrahlt, sodass lediglich auf der zu trocknenden Fläche die zur Trocknung erforderliche Wärmeenergie in das Elektrodenmaterial eingebracht wird. Das Lasertrocknungsverfahren weist den Vorteil eines deutlich reduzierten Energiebedarfs (um bis zu 80 %) sowie einer deutlich reduzierten Trocknungsdauer auf.

Nachteilig am genannten Lasertrocknungsverfahren ist, dass eine Verkürzung seiner Zeitdauer durch die Diffusionsgeschwindigkeit der Feuchtigkeit innerhalb des Elektrodenmaterials beschränkt wird.

Bei zu hoher Leistung des Lasers der Lasertrocknung wird hauptsächlich die Oberfläche des Elektrodenmaterials getrocknet und gegebenenfalls thermisch beschädigt. Tieferliegendes Elektrodenmaterial beziehungsweise Schichten bleiben feucht.

Bei bekannten Lasertrocknungsverfahren basiert die Trocknung von tieferen Schichten des Elektrodenmaterials somit auf der Wärmeleitung im Elektrodenmaterial. Hierbei wird die durch den Laser oberflächlich eingebrachte Wärmeenergie mittels Wärmeleitung in tiefere Schichten transportiert. Diese Wärmeleitung ist aus physikalischen Gründen zeitlich deutlich langsamer, das heißt träge.

Der vorliegenden Erfindung liegt die Aufgabe zugrunde, eine Lasertrocknung eines Elektrodenmaterials für eine Batteriezellenherstellung zu verbessern.

Die Aufgabe wird durch ein Verfahren mit den Merkmalen des unabhängigen Patentanspruches 1 sowie durch eine Vorrichtung mit den Merkmalen des unabhängigen Patentanspruches 11 gelöst. In den abhängigen Patentansprüchen sind vorteilhafte Ausgestaltungen und Weiterbildungen der Erfindung angegeben.

Das erfindungsgemäße Verfahren zur Trocknung eines Elektrodenmaterials einer Batteriezellenherstellung erfolgt mittels einer Lasertrocknung und ist gekennzeichnet dadurch, dass mit einer ersten Leistung eines erstens Lasers der Lasertrocknung eine Vertiefung in das Elektrodenmaterial durch einen Materialabtrag hergestellt wird, und anschließend mit einer gegenüber der ersten Leistung reduzierten zweiten Leistung eines zweiten Lasers innerhalb der Vertiefung ein materialabtragsfreier Wärmeeintrag zur Trocknung erfolgt.

Es können eine oder mehrere Vertiefungen mit einem oder mehreren Wärmeeinträgen vorgesehen sein.

Eine Trocknung im Sinne der vorliegenden Erfindung kann eine wenigstens teilweise Reduzierung der Feuchtigkeit wenigstens eines Teilbereichs des Elektrodenmaterials sein. Hierbei kann die Feuchtigkeit auf einen festgelegten Sollwert reduziert werden. Eine nahezu vollständige beziehungsweise vollständige Trocknung des Elektrodenmaterials kann ebenfalls vorgesehen sein.

Als Maß für die Feuchtigkeit kann die Materialfeuchte, insbesondere der Wassergehalt, der Wasseranteil, der volumenbezogene Feuchtegehalt, der volumenbezogene Feuchteanteil und/oder der Trockenmassenanteil herangezogen werden.

Die Vertiefung kann zylinderförmig beziehungsweise kanalförmig ausgebildet sein. Insbesondere ist die Vertiefung eine Perforation beziehungsweise ein Loch, das heißt eine Öffnung, die sich von einer Seite des Elektrodenmaterials zu einer weiteren Seite des Elektrodenmaterials erstreckt.

Die Vertiefung wird durch einen Materialabtrag, das heißt durch ein wenigstens teilweises Verdampfen des Elektrodenmaterials hergestellt. Der Materialabtrag erfolgt mittels des ersten Lasers und mit der ersten Leistung. Mit anderen Worten ist der erste Laser beziehungsweise seine Leistung derart ausgebildet und eingestellt, eine oder mehrere Vertiefungen innerhalb des Elektrodenmaterials zu erzeugen.

Gemäß der vorliegenden Erfindung wird mittels des ersten Lasers wenigstens eine Vertiefung innerhalb des Elektrodenmaterials hergestellt. Dies erfolgt mittels der ersten Leistung, die ausreichend groß eingestellt ist, damit der entsprechende Materialabtrag erfolgen kann.

Anschließend wird der zweite Laser dazu verwendet, innerhalb der hergestellten Vertiefung einen Wärmeeintrag zu bewirken. Hierzu ist die Leistung des zweiten Lasers auf die zweite Leistung eingestellt, die kleiner, insbesondere deutlich kleiner, als die erste Leistung ist. Das ist deshalb der Fall, da kein weiterer Materialabtrag beim Wärmeeintrag erfolgen soll. Mit anderen Worten erfolgt in diesem Schritt ein materialabtragsfreier Wärmeeintrag.

Es ist eine Erkenntnis der vorliegenden Erfindung, dass die thermische Leistung eines Lasers lediglich eine Eindringtiefe von wenigen (<10) Mikrometern aufweist, was bei typischen Beschichtungsdicken von etwa 150 Mikrometern unzureichend ist, um auch tiefere Schichten des Elektrodenmaterials zu erwärmen. Die Erhitzung der tieferen Schichten basiert daher auf der Wärmeleitung im Material, mit der die Wärmeenergie aus dem vom Laser erhitzten Bereich in tiefere Schichten transportiert wird. Diese Wärmeleitung ist aus physikalischen Gründen deutlich langsamer als die erfindungsgemäß vorgesehene direkte Erwärmung des Elektrodenmaterials, die durch die hergestellte Vertiefung ermöglicht wird.

Ein Vorteil der vorliegenden Erfindung ist somit, dass durch die hergestellte Vertiefung der Wärmeeintrag durch den zweiten Laser unmittelbar in tieferliegenden Schichten des Elektrodenmaterials erfolgt. Dadurch kann das Verfahren der Lasertrocknung signifikant zeitlich beschleunigt werden. Das ist deshalb der Fall, da die Trocknung von tieferen Schichten nicht ausschließlich über die Wärmeleitung, sondern ebenfalls durch einen direkten beziehungsweise unmittelbaren Wärmeeintrag erfolgt. Hierbei ist es weiterhin vorteilhaft, wenn der zweite Laser in der Vertiefung eine festgelegte Zeitdauer verharrt. Dadurch kann die zweite Leistung verringert werden, sodass das Elektrodenmaterial schonender getrocknet wird. Durch die geringere zweite Leistung bei höherer Verweildauer in der Vertiefung bringt der zweite Laser seine Wärmeenergie derart ein, dass ebenfalls in den tieferen Schichten des Elektrodenmaterials die Feuchtigkeit zum Verdampfen gebracht werden kann. Dadurch erfolgt eine schnellere sowie schonendere Trocknung.

Ein weiterer Vorteil der vorliegenden Erfindung ist, dass durch eine oder mehrere Vertiefungen eine Mikrostrukturierung oder Makrostrukturierung des Elektrodenmaterials beziehungsweise der Elektrodenoberfläche ausgebildet wird. Durch die Vertiefungen, die beispielsweise regelmäßig gemäß eines Rasters hergestellt und angeordnet werden, kann ein späterer Elektrolyt verbessert in die tieferen Schichten der Elektrode eindringen. Dadurch kann das Leistungsverhalten der Zelle verbessert werden, da die Beweglichkeit und Erreichbarkeit des Elektrolytes zu möglichst allen in der Aktivmaterialschicht enthaltenen Partikel verbessert wird.

Die vorliegende Erfindung kombiniert somit synergetisch eine laserbasierte Herstellung einer Vertiefung/Strukturierung, insbesondere Perforation, des Elektrodenmaterials mit einer anschließenden direkten Einbringung von Heizleistung in die hergestellte Vertiefung zur Trocknung. Mit anderen Worten stellt die Erfindung ein zweistufiges Verfahren bereit, bei dem zunächst eine Vertiefung, beispielsweise ein kleines Loch, in das zu trocknende Elektrodenmaterial gebrannt wird und anschließend die dadurch zugänglich gemachten tieferen Schichten des Elektrodenmaterials einem direkten Wärmeeintrag zur Trocknung ausgesetzt werden können. Hierbei ist die Vertiefung gleichzeitig für die spätere Leistung der hergestellten Zellen vorteilhaft.

Die erfindungsgemäße Vorrichtung zur Trocknung eines Elektrodenmaterials einer Batteriezellenherstellung umfasst eine Lasertrocknung und ist gekennzeichnet dadurch, dass die Lasertrocknung dazu ausgebildet ist, mit einer ersten Leistung eines ersten Lasers der Lasertrocknung eine Vertiefung in das Elektrodenmaterial durch einen Materialabtrag herzustellen, und anschließend mit einer gegenüber der ersten Leistung reduzierten zweiten Leistung eines zweiten Lasers innerhalb der Vertiefung einen materialabtragsfreien Wärmeeintrag zur Trocknung durchzuführen.

Die Steuerung oder Regelung der Laser und ihrer Leistung kann durch eine Steuereinheit der Vorrichtung erfolgen.

Es ergeben sich zum erfindungsgemäßen Verfahren gleichartige, gleichwertige und gleichwirkende Vorteile und/oder Ausgestaltungen der erfindungsgemäßen Vorrichtung.

Gemäß einer vorteilhaften Ausgestaltung der Erfindung wird als zweiter Laser der erste Laser verwendet, wobei hierbei die Leistung des ersten Lasers auf die zweite Leistung reduziert wird.

Mit anderen Worten wird für das Herstellen der Vertiefung sowie für den Wärmeeintrag innerhalb der Vertiefung derselbe Laser verwendet. Für den Wärmeeintrag wird die für das Herstellen der Vertiefung erforderliche höhere erste Leistung des Lasers auf die zweite Leistung reduziert. Hierbei ist die zweite Leistung derart festgelegt oder eingestellt, dass lediglich ein Wärmeeintrag und im Vergleich zur ersten Leistung kein weiterer Materialabtrag innerhalb der Vertiefung erfolgt. Das Einstellen der jeweiligen Leistung sowie die zeitliche Abfolge beziehungsweise Koordination kann durch die Steuereinheit der Vorrichtung erfolgen. Mit anderen Worten erfolgt eine zweistufige Ansteuerung des Lasers, der insbesondere als Hochleistungslaser ausgebildet ist.

In einer vorteilhaften Weiterbildung der Erfindung wird als erster Laser ein Pulslaser verwendet.

Pulslaser sind besonders vorteilhaft für einen Materialabtrag und somit für das Herstellen der Vertiefungen geeignet. Hierbei erfolgt der Materialabtrag durch lokales Verdampfen des Elektrodenmaterials. Dies ist vergleichbar zu einer Lasergravur. Die Pulsdauer sowie die Peakleistung (erste Leistung) kann in Abhängigkeit des Elektrodenmaterials festgelegt und/oder eingestellt werden. Weiterhin kann eine Durchschnittsleistung als erste Leistung vorgesehen sein.

Hierbei wird bevorzugt als erster Laser ein Pikosekundenlaser oder ein Femtosekundenlaser verwendet.

Mit anderen Worten liegt die Pulsdauer bevorzugt im Pikosekundenbereich, das heißt im Bereich von 10⁻⁹ Sekunden bis 10⁻¹² Sekunden, oder im Femtosekundenbereich, das heißt im Bereich von 10⁻¹² Sekunden bis 10⁻¹⁵ Sekunden.

Gemäß einer vorteilhaften Ausgestaltung der Erfindung wird eine Verweildauer des zweiten Lasers innerhalb der Vertiefung in Abhängigkeit des Elektrodenmaterials eingestellt.

Vorteilhafterweise kann dadurch der zur Trocknung erforderliche Wärmeeintrag in Abhängigkeit des Elektrodenmaterials eingestellt werden. Dadurch wird vorteilhafterweise eine materialspezifische Trocknung ermöglicht.

In einer vorteilhaften Weiterbildung der Erfindung werden mehrere Vertiefungen gemäß eines Rasters hergestellt.

Dadurch kann vorteilhafterweise eine lokale Trocknung des Elektrodenmaterials erfolgen. Hierbei kann das Raster regelmäßig sein. Die Rasterelemente des Rasters können rechteckförmig, insbesondere quadratisch, ausgebildet sein.

Gemäß einer vorteilhaften Ausgestaltung der Erfindung wird eine kanalförmige Vertiefung hergestellt.

Hierbei wird bevorzugt eine nadelförmige Vertiefung hergestellt.

Bevorzugt wird die kanalförmige Vertiefung senkrecht zu einer Oberfläche des Elektrodenmaterials hergestellt.

Das ist deshalb von Vorteil, da typischerweise das Elektrodenmaterial auf einem Stromsammler, beispielsweise einer Metallfolie aufgebracht ist, sodass das Elektrodenmaterial bandförmig ist. Die Vertiefungen werden dann bevorzugt senkrecht zur Bandoberfläche hergestellt.

In einer besonders vorteilhaften Weiterbildung der Erfindung wird mittels des ersten Lasers eine Perforation des Elektrodenmaterials, insbesondere bis auf einen Stromsammler, als Vertiefung erzeugt.

Mit anderen Worten ist die Vertiefung als Perforation, das heißt als Loch, ausgebildet. Das ist deshalb von Vorteil, da hierbei der Wärmeeintrag direkt am Stromsammler, der typischerweise als Metallfolie ausgebildet ist, erfolgt. Dadurch kann die gute Wärmeleitung des metallischen Stromsammlers ausgenutzt werden, um den Wärmeeintrag schneller über das Elektrodenmaterial zu verteilen. Mit anderen Worten wird ein derart tiefes Loch hergestellt beziehungsweise gebrannt, dass der zweite Laser anschließend seine Wärmeleistung bis auf die metallische Kollektorfolie bringen kann, welche als guter Wärmeleiter die Wärme auch an umliegende Stellen des Elektrodenmaterials verteilt. Dies ist insbesondere für beidseitig beschichtete Folien vorteilhaft.

Gemäß einer vorteilhaften Ausgestaltung der Erfindung werden/wird die erste und/oder zweite Leistung in Abhängigkeit des Elektrodenmaterials eingestellt.

Dadurch kann vorteilhafterweise eine materialspezifische Trocknung durchgeführt werden.

Weitere Vorteile, Merkmale und Einzelheiten der Erfindung ergeben sich aus den im Folgenden beschriebenen Ausführungsbeispielen sowie anhand der Zeichnungen. Dabei zeigen schematisiert:
- Figur 1: ein Verfahren gemäß einer Ausgestaltung der vorliegenden Erfindung;
- Figur 2: ein Leistungs-Zeit-Diagramm zur Ansteuerung eines Lasers; und
- Figur 3: eine besonders bevorzugte Ausgestaltung des Verfahrens.

Gleichartige, gleichwertige oder gleichwirkende Elemente können in einer der Figuren oder in den Figuren mit denselben Bezugszeichen versehen sein.

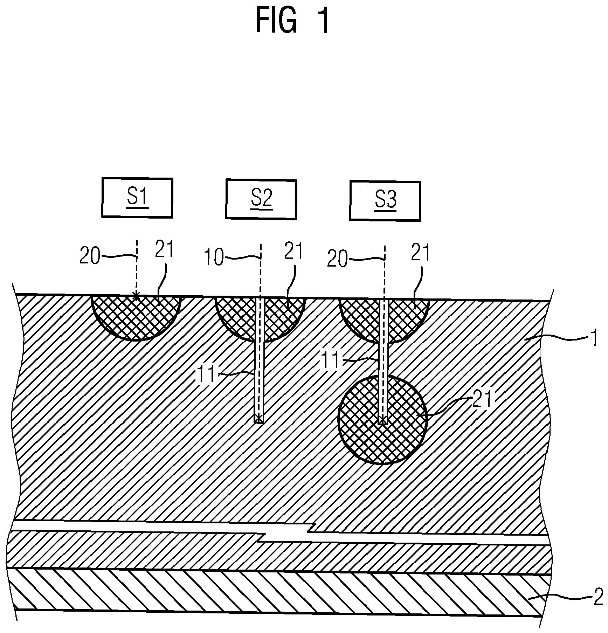

Die Figur 1 zeigt eine seitliche Schnittansicht eines Elektrodenmaterials 1 einer Batteriezellenherstellung.

Das Elektrodenmaterial 1 ist auf einem Stromsammler 2, der insbesondere als Metallfolie (Kollektorfolie) ausgebildet ist, angeordnet.

Für die Batteriezellenherstellung ist eine Trocknung des Elektrodenmaterials 1 erforderlich, die vorliegend mittels einer Lasertrocknung erfolgt. Die nicht dargestellte Lasertrocknung weist einen ersten Laser 10 sowie einen zweiten Laser 20 auf. Der erste Laser 10 wird mit einer ersten Leistung und der zweite Laser 20 mit einer bezüglich der ersten Leistung geringeren zweiten Leistung betrieben. Hierbei wird die erste Leistung derart eingestellt, dass ein Materialabtrag 11 des Elektrodenmaterials 1 erfolgen kann. Die zweite Leistung wird derart eingestellt, dass ein materialabtragsfreier Wärmeeintrag 21 in das Elektrodenmaterial 1 erfolgt. Die erste Leistung beziehungsweise der Materialabtrag dient dem Herstellen einer Vertiefung 11 innerhalb des Elektrodenmaterials 1. Der Wärmeeintrag 21 dient der Trocknung des Elektrodenmaterials 1.

In einem ersten Schritt S1 wird zunächst ein Teilbereich der Oberfläche des Elektrodenmaterials 1 mittels des zweiten Lasers 20 durch einen Wärmeeintrag 21 teilweise oberflächlich getrocknet. Der Wärmeeintrag 21 ist hierbei durch den halbkreisförmigen schraffierten Bereich in der Figur 1 symbolhaft angedeutet.

In einem zweiten Schritt S2 wird dort, wo der vorherige Wärmeeintrag 21 an der Oberfläche erfolgte, eine Vertiefung 11 mittels des ersten Lasers 10 hergestellt. Die Vertiefung 11 erstreckt sich hierbei in tieferliegende Schichten des Elektrodenmaterials 1, insbesondere über den halbkreisförmigen Bereich des vorhergehenden Wärmeeintrages 21 hinaus. Die Vertiefung 11 ist insbesondere als nadelartiger oder nadelförmiger Kanal ausgebildet. Besonders bevorzugt erstreckt sich die Vertiefung 11 bis auf den Stromsammler 2.

In einem dritten Schritt S3 erfolgt innerhalb der hergestellten Vertiefung 11 ein weiterer Wärmeeintrag 21. Der weitere, nun tieferliegende Wärmeeintrag 21 ist in der Figur 1 durch den kreisförmig schraffierten Bereich symbolhaft angedeutet. Dadurch erfolgt somit ein direkter Wärmeeintrag 21 in tieferliegenden Schichten des Elektrodenmaterials 1.

Im folgenden Ausführungsbeispiel wird für den ersten Laser 10 und den zweiten Laser 20 derselbe Laser 10, 20 verwendet.

Im ersten Schritt S1 wird das Elektrodenmaterial 1 zunächst mit niedriger Leistung (zweite Leistung) des Lasers 10, 20 über einen längeren Zeitraum erhitzt. Durch die niedrigere zweite Leistung des Lasers 10, 20 wird sichergestellt, dass das Elektrodenmaterial 1 nicht verbrennt und die eingebrachte Energie im Elektrodenmaterial 1 durch Wärmeleitung weiter transportiert werden kann. Es erfolgt somit kein Materialabtrag. Die Dauer und die Leistung dieses Vorganges können spezifisch für jedes Elektrodenmaterial 1 eingestellt werden.

Im zweiten Schritt S2 wird der Laser 10, 20 mit sehr hoher Leistung (zweite Leistung) für einen deutlich kürzeren Zeitraum betrieben. Damit wird sichergestellt, dass die eingebrachte Energie in einem Punkt konzentriert wird und zum lokalen Verdampfen des Elektrodenmaterial 1 führt, ohne die Umgebung thermisch zu schädigen. Es erfolgt somit ein Materialabtrag.

Im dritten Schritt S3 wird wieder mit der niedrigeren Leistung (zweite Leistung) das Elektrodenmaterial 1 über einen längeren Zeitraum erhitzt, diesmal jedoch innerhalb der Vertiefung 11 und somit tiefer unter der Oberfläche des Elektrodenmaterials 1 und damit direkt an dem Ort, an dem noch Restfeuchtigkeit vorhanden ist.

Im weiteren Verlauf des Verfahrens können die Schritte S1, S2 und S3 so lange wiederholt werden, bis die Beschichtung 1 bis auf den Stromsammler 2 durchgetrocknet ist. Hierbei kann das Rastermaß zwischen den eingebrachten Löchern 11 in Abhängigkeit des Zelltyps ermittelt, festgestellt und/oder eingestellt werden.

Als weiteres Kriterium für die durch die Vertiefungen 11 ausgebildete Strukturierung des Elektrodenmaterials 1 kann berücksichtigt werden, dass die so entstandene Perforation 11 nach dem Primärzweck der Trocknung auch die genannten Vorteile der verbesserten Zugänglichkeit des Elektrolytes hat, sofern diese nicht in einem weiteren Prozessschritt eines Kalanders zerstört werden.

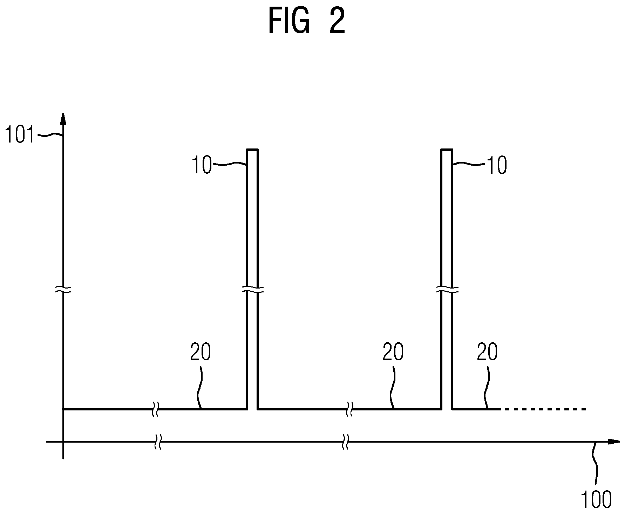

Die Figur 2 zeigt ein Leistungs-Zeit-Diagramm zur Ansteuerung des Lasers 10, 20. Hierbei wird die Leistung des Lasers 10, 20 sowie die zeitliche Abfolge durch eine Steuereinheit gesteuert oder geregelt.

An der Abszisse 100 des Diagramms ist die Zeit in beliebigen Einheiten aufgetragen. An der Ordinate 101 des Diagramms ist die Leistung des Lasers 10, 20 in beliebigen Einheiten aufgetragen.

Der Laser 10, 20 kann mit einer ersten Leistung 10 und mit einer deutlich geringeren zweiten Leistung 20 betrieben werden. Die erste Leistung 10 ist zum Herstellen der Vertiefung vorgesehen. Die Zeitdauer des Betriebes mit der ersten Leistung 10 ist somit deutlich kürzer als die Zeitdauer des Betriebes mit der der zweiten Leistung 20.

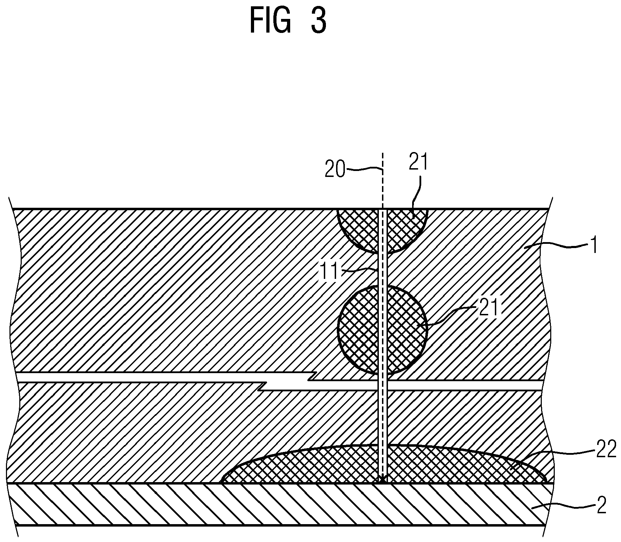

Die Figur 3 zeigt eine besonders bevorzugte Ausgestaltung des Verfahrens.

Gemäß der Figur 3 erstreckt sich die Vertiefung 11 von der Oberfläche des Elektrodenmaterials 1 bis auf den Stromsammler 2. Dadurch kann ein weiterer Wärmeeintrag 22 mit der zweiten Leistung 20 und längerer Zeitdauer direkt am Stromsammler 2 erfolgen. Aufgrund der guten Wärmeleitung des metallischen Stromsammlers 2 führt dieses Vorgehen zu einer weiträumigeren Erwärmung 22 des Elektrodenmaterials 2. Dadurch wird die Trocknung effizienter und zeitlich kürzer.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

### Bezugszeichenliste

- 1: Elektrodenmaterial
- 2: Stromsammler
- 10: erster Laser
- 11: Vertiefung
- 20: zweiter Laser
- 21: Wärmeeintrag
- 22: weiterer Wärmeeintrag
- 100: Abszisse
- 101: Ordinate

- S1: erster Schritt
- S2: zweiter Schritt
- S3: dritter Schritt

## Patentansprüche

1. Verfahren zur Trocknung eines Elektrodenmaterials (1) einer Batteriezellenherstellung mittels einer Lasertrocknung, **gekennzeichnet dadurch, dass** mit einer ersten Leistung eines erstens Lasers (10) der Lasertrocknung eine Vertiefung (11) in das Elektrodenmaterial (1) durch einen Materialabtrag hergestellt wird, und anschließend mit einer gegenüber der ersten Leistung reduzierten zweiten Leistung eines zweiten Lasers (20) innerhalb der Vertiefung (11) ein materialabtragsfreier Wärmeeintrag (21) zur Trocknung erfolgt.

2. Verfahren gemäß Anspruch 1, **gekennzeichnet dadurch, dass** als zweiter Laser (20) der erste Laser (10) verwendet wird, wobei hierbei die Leistung des ersten Lasers (10) auf die zweite Leistung reduziert wird.

3. Verfahren gemäß Anspruch 1 oder 2, **gekennzeichnet dadurch, dass** als erster Laser (10) ein Pulslaser verwendet wird.

4. Verfahren gemäß Anspruch 3, **gekennzeichnet dadurch, dass** als erster Laser (10) ein Pikosekundenlaser oder ein Femtosekundenlaser verwendet wird.

5. Verfahren gemäß einem der vorhergehenden Ansprüche, **gekennzeichnet dadurch, dass** eine Verweildauer des zweiten Lasers (20) innerhalb der Vertiefung (11) in Abhängigkeit des Elektrodenmaterials (1) eingestellt wird.

6. Verfahren gemäß einem der vorhergehenden Ansprüche, **gekennzeichnet dadurch, dass** mehrere Vertiefungen (11) gemäß eines Rasters hergestellt werden.

7. Verfahren gemäß einem der vorhergehenden Ansprüche, **gekennzeichnet dadurch, dass** eine kanalförmige Vertiefung (11) hergestellt wird.

8. Verfahren gemäß einem der vorhergehenden Ansprüche, **gekennzeichnet dadurch, dass** eine kanalförmige Vertiefung (11) senkrecht zu einer Oberfläche des Elektrodenmaterials (1) hergestellt wird.

9. Verfahren gemäß einem der vorhergehenden Ansprüche, **gekennzeichnet dadurch, dass** mittels des ersten Lasers (10) eine Perforation des Elektrodenmaterials (1), insbesondere bis auf einen Stromsammler (2), als Vertiefung (11) erzeugt wird.

10. Verfahren gemäß einem der vorhergehenden Ansprüche, **gekennzeichnet dadurch, dass** die erste und/oder zweite Leistung in Abhängigkeit des Elektrodenmaterials (1) eingestellt werden/wird.

11. Vorrichtung zur Trocknung eines Elektrodenmaterials (1) einer Batteriezellenherstellung, umfassend eine Lasertrocknung, **gekennzeichnet dadurch, dass** die Lasertrocknung dazu ausgebildet ist, mit einer ersten Leistung eines erstens Lasers (10) der Lasertrocknung eine Vertiefung (11) in das Elektrodenmaterial (1) durch einen Materialabtrag herzustellen, und anschließend mit einer gegenüber der ersten Leistung reduzierten zweiten Leistung eines zweiten Lasers (20) innerhalb der Vertiefung (11) einen materialabtragsfreien Wärmeeintrag (21) zur Trocknung durchzuführen.
